# EUROPEAN PATENT APPLICATION

(11) **EP 1 677 031 A1**
(43) Date of publication of application: **05.07.2006**
(21) Application number: 04787647.9
(22) Date of filing: 06.09.2004
(51) Int. Cl.: F16H 25/22

(54) **ROLLER SCREW**

(30) Priority: 20.10.2003 JP 2003360041
(71) Applicant: THK CO., LTD., Shinagawa-ku, Tokyo 141-0031 (JP)
(72) Inventor: TERAMACHI, Akihiro;, nagawa-ku, Tokyo 1410031; (JP); MICHIOKA, Hidekazu;, nagawa-ku, Tokyo 1410031; (JP); NIWA, Hiroshi;, nagawa-ku, Tokyo 1410031; (JP); NISHIMURA, Kentaro;, nagawa-ku, Tokyo 1410031; (JP)
(74) Representative: Viering, Jentschura & Partner
(86) International application number: PCT/JP2004/012943
(87) International publication number: WO 2005/038300

(57) **Abstract**

A roller screw includes: a screw shaft 1 having an outer peripheral surface in which a spiral roller rolling groove 1a is formed; a nut member 2 having an inner peripheral surface in which a spiral loaded roller rolling groove 2a is formed so as to oppose to the roller rolling groove 1a; a return pipe 4 connecting one and another ends of a loaded roller rolling groove 2a of the nut member 2; and a plurality of rollers 6 disposed in the loaded roller rolling passage 3 and the return pipe 4. A spacer 31 is disposed between a pair of adjacent rollers 6, 6 so as to prevent the paired rollers 6, 6 from contacting each other. According to such roller screw, the rollers can be smoothly circulated without causing any skew.

## Description

### Technical Field

The present invention relates to a roller screw in which rollers are disposed to be capable of carrying out a rolling motion between a screw shaft and a nut member.

### Background Technology

There is known a ball screw in which balls are disposed to be movable between the screw shaft and the nut member. The balls are disposed between a spiral ball rolling groove formed to an outer peripheral surface of the screw shaft and a spiral loaded ball rolling groove formed to an inner peripheral surface of the nut member. When the screw shaft is rotated relative to the nut member, a number of balls roll on the ball rolling groove of the screw shaft and the loaded ball rolling groove of the nut member. The ball rolls to one end of the loaded ball rolling groove of the nut member is scooped up by a ball return member connecting one and the other ends of the loaded ball rolling groove and then returns to the original position in the loaded ball rolling groove, and thus, the balls circulate.

In the use of the ball screw, since a friction coefficient at the time of rotation of the screw shaft with respect to the nut member can be reduced, the ball screw is commercially utilized for a positioning mechanism of a machine tool, a feed mechanism, a steering gear of an automobile and so on. However, in such arrangement, the balls contact substantially at point contact to the ball rolling groove of the screw shaft surrounding the balls and the loaded ball rolling groove of the nut member surrounding the balls, so that an allowable load to be applied to the ball screw cannot be made large, thus being defective and inconvenient.

A roller screw using rollers instead of balls for making large the allowable load is disclosed, for example, in Patent Publications 1 and 2.
Patent Publication 1: Japanese Patent Unexamined Application (Laid-open) Publication HEI 11-210858
Patent Publication 1: Japanese Utility Model Unexamined Application (Laid-open) Publication HEI 6-87764

### Disclosure of The Invention

### Problems to be solved by The Invention

The roller screw is often used under a large loaded condition. Rigidity is hence an essential performance required for the roller screw. In a case where a space, i.e. play or backlash, exists between the roller and the roller rolling groove, or the rigidity is not sufficient between them even if such play does not exist, a working point of a machine, to which the roller screw is assembled, will be displaced and, hence, precise working cannot be done. In addition, at a time when the roller moves fast and rapidly stops, the machine will be vibrated and much time will be required to become stationary.

In the filed of a roller bearing, a technology for imparting a preload is well known for improving the rigidity. The roller screws using the rollers as rolling members are proposed as, for example, disclosed in the Patent Publications 1 and 2, but have not been manufactured as products, and a technology for imparting the preload to the roller screw has not been developed.

Then, an object of the present invention is to provide a roller screw capable of imparting a preload appropriately in accordance with the structure of the roller screw.

### Means for solving The Problem

The present invention will be described hereunder, in which although reference numerals described on drawings are added with parenthesis for the easy understanding of the present invention, the present invention is not limited to the embodiment shown in the drawings.

In order to solve the above problem, the invention of claim 1 is a roller screw comprising: a screw shaft (1) having an outer peripheral surface in which a spiral roller rolling groove (1a) is formed; a nut member (2) having an inner peripheral surface in which a spiral loaded roller rolling groove (2a) is formed so as to oppose to the roller rolling groove (1a) of the screw shaft; a return member (4) connecting one and another ends of a loaded roller rolling groove (2a) of the nut member (2) and configured to circulate a roller rolling the loaded roller rolling passage (3) between the roller rolling groove (1a) of the screw shaft (1) and the loaded roller rolling groove (2a) of the nut member (2); and a plurality of rollers (6) disposed in the loaded roller rolling passage (3) and the return member (4), wherein a spacer (31) is disposed between a pair of adjacent rollers (6, 6) so as to prevent the paired rollers from contacting each other.

The invention of claim 2 is characterized, in addition to the roller screw of claim 1, in that the spacer (31) is formed with concave portions (31a, 31a) at both ends in an advancing direction thereof so as to contact an outer peripheral surface of the roller (6), and the roller (6) contacts the concave portions (31a) along an entire length in the axial direction thereof.

The invention of claim 3 is characterized, in addition to the roller screw of claim 2, in that a pair of axes of the rollers (6, 6) are disposed in a pair of planes (PI, P2) substantially parallel with each other in a state that the paired rollers (6, 6) disposed at both the ends in the advancing direction contact the concave portions (31a, 31a) of the spacer (31).

The invention of claim 4 is characterized, in addition to the roller screw of claim 2 or 3, in that an intersecting portion of the concave portion (31a) of the spacer (31) and a surrounding surface portion (31c) of the space except the concave portion (31 a) is chamfered so as to perform a smooth circulation of the spacer.

The invention of claim 5 is characterized, in addition to the roller screw of any one of claims 1 to 4, in that the return member (4) includes a central portion (14) extending linearly and a pair of end portions (15, 15) bent on both sides of the central portion, front end portions (15b) of the end portions (15) are disposed in a tangential direction of the loaded roller rolling passage (3) as viewed from the axial direction of the screw shaft (1) and are inclined in a lead angle direction of the loaded roller rolling passage (3) as viewed from a side of the screw shaft (1).

The invention of claim 6 is characterized, in addition to the roller screw of any one of claims 1 to 5, in that a loaded roller rolling passage (3) having a square section is formed between the roller rolling groove (1a) of the screw shaft (1) and the loaded roller rolling groove (2a) of the nut member (2), and axes of a pair of adjacent rollers (6, 6) are perpendicular to each other as viewed from a roller advancing direction.

### Effect of The Invention

According to the invention of claim 1, since the concave portions of the spacer contact the roller to thereby keep the predetermined attitude of the roller, the roller can smoothly circulate without causing any skew.

According to the invention of claim 2, the skew of the roller can be surely prevented.

According to the invention of claim 3, the roller can smoothly circulate without causing any skew with respect to either one of spiral track of the loaded roller rolling passage and linear track in the return member. Although details will be described hereinafter, when the concave portions on both ends of the spacer are formed so that the axis of the roller rolling in the spiral loaded roller rolling passage inclines toward the center of the screw shaft in a state viewed from the axial direction of the screw shaft, the roller moves in the linear track, for example, of the return member and does not smoothly circulate therein, which was confirmed through experiment.

According to the invention of claim 4, the engagement of the spacer at the joint portion between the loaded roller rolling passage and the return member can be prevented.

As recited in claim 5, the present invention can be preferably applicable to a return member provided with a central portion extending linearly and a pair of end portions bent at both sides of the central portion. The front end of the end portion is arranged in the tangential direction of the loaded roller rolling passage and the lead angle direction thereof, so that the spacer can be smoothly moved at the joint portion between the loaded roller rolling passage and the return member.

As recited in claim 6, the present invention can be preferably applicable to a roller in cross-arrangement which easily causes the skew.

### Brief Description of The Drawings:

[FIG. 1] FIG. 1 is a side view showing a roller screw according to one embodiment of the present invention.
[FIG. 2] FIG. 2 is a side view showing a screw shaft.
[FIG. 3] FIG. 3 is a detailed sectional view showing a roller rolling groove and a loaded roller rolling groove.
[FIG. 4] FIG. 4 is a plan view showing a nut member.
[FIG. 5] FIG. 5 is a front view showing the nut member.
[FIG. 6] FIG. 6 is a plan view of the nut member with a return pipe being removed.
[FIG. 7] FIG. 7 is a front view showing the nut member with a return pipe being removed.
[FIG. 8] FIG. 8 is a view showing the return pipe.
[FIG. 9] FIG. 9 is a view showing the return pipe.
[FIG. 10] FIG. 10 is a view showing the return pipe.
[FIG. 11] FIG. 11 is a sectional view showing changes of the sectional shape of a roller return passage at a central portion of the return pipe.
[FIG. 12] FIG. 12 is a view showing change of a roller attitude.
[FIG. 13] FIG. 13 is a detailed view of a spacer, (in which (a) is a front view, and (b) is a side view).
[FIG. 14] FIG. 14 is a view showing the spacer disposed between the rollers, (in which (A) is a section of A-A, (B) is a section of B-B and (C) is a front view).
[FIG. 15] FIG. 15 is a view showing comparison of a spacer disposed between the rollers, (in which (A) is a section of A-A, (B) is a section of B-B and (C) is a front view).
[FIG. 16] FIG. 16 is a plan view showing a joint portion between the loaded roller rolling passage and the return pipe.
[FIG. 17] FIG. 17 is an enlarged view of "A" in FIG. 16.
[FIG. 18] FIG. 18 is a sectional view showing a the joint portion between the loaded roller rolling passage and the return Pipe.

### Reference Numeral

1 --- screw shaft, 1a --- roller rolling groove, 2 --- nut member, 2a --- loaded roller rolling groove, 3 --- loaded roller rolling passage, 4 --- return pipe (return member), 6 ---- roller, 6a, 6b --- axes of rollers, 14 --- central portion, 15 --- end portion, 15b --- front end portion, 31 --- spacer, 31a --- concave (recessed) portion, P1, P2a pair of planes.

### Best Mode for embodying The Invention

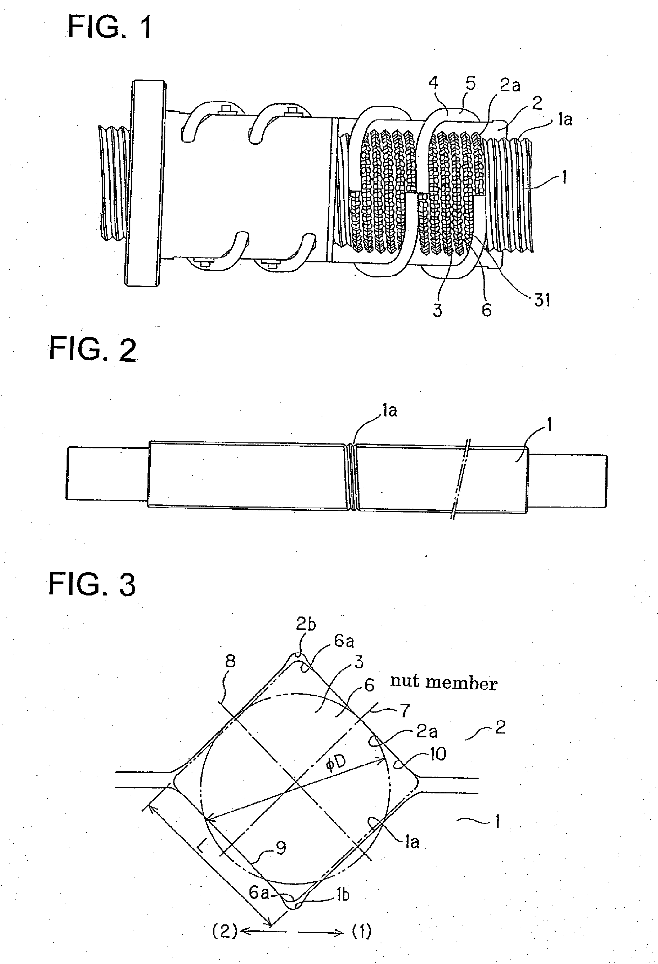

FIG. 1 shows a roller screw according to one embodiment of the present invention. The roller screw includes a screw shaft 1 formed, in its outer peripheral surface, with a roller rolling groove 1a in form of spiral and a nut member 2 formed, in its inner peripheral surface, with a loaded roller rolling groove, in form of spiral, and assembled with the screw shaft 1 to be relatively rotatable. The nut member 2 is provided with a return pipe 4 as a circulation member connecting one and the other ends of a loaded roller rolling groove 3 between the roller rolling groove 1a of the screw shaft 1 and the loaded roller rolling groove 2a of the nut member 2. Inside the return pipe, there is formed a roller return passage 5, having a rectangular section such as square shape in this embodiment, along the axial direction of the return pipe. A number of rollers 6 are accommodated and arranged in the loaded roller rolling passage 3 formed by the roller rolling groove 1a of the screw shaft 1 and the loaded roller rolling groove 2a of the nut member 2 and in the roller returning passage 5 formed inside the return pipe 4. A retainer 31 is disposed between a pair of adjacent rollers so as to prevent the paired rollers from contacting each other.

According to the relative rotation of the screw shaft 1 with respect to the nut member 2, the nut member 2 moves linearly relative to the screw shaft 1 in the axial direction thereof. In this moment, the roller 6 rolls between the roller rolling groove 1a and the loaded roller rolling groove 2a. Since the spacer 31 is disposed between the rollers 6 and 6, the spacer 31 moves in the loaded roller rolling groove together with the roller 6 while the roller 6 is sliding with respect to the spacer 31. The roller 6 rolling to one end of the loaded roller rolling groove 2a is guided to the roller returning passage 5 in the return pipe 4 and then returned to the other end of the loaded roller rolling groove 2a on the succeeding several turns of spiral. The rollers 6 are thereby circulated in the roller circulation passage constituted by the loaded roller rolling passage 3 and the roller returning passage 5.

FIG. 2 shows the screw shaft 1. The spiral roller rolling groove having a predetermined lead is formed in the outer peripheral surface of the screw shaft 1. The roller rolling groove 1a has a V-shaped section with an opening angle of 90 degrees. As a screw, a single threaded screw, double threaded screw, triple threaded screw or other various type screws may be utilized, and in this embodiment, double threaded screw is utilized.

FIG. 3 shows a detailed view of the roller rolling groove 1a of the screw shaft 1 and the loaded roller rolling groove 2a of the nut member 2. The nut member 2 is formed with the spiral loaded roller rolling groove 2a opposing to the roller rolling groove 1a. The loaded roller rolling groove 2a also has a V-shaped section with an opening angle of 90 degrees. The loaded roller rolling passage 3, having a rectangular section, such as square section in this embodiment, is formed by the roller rolling groove 1a and the loaded roller rolling groove 2a. In the loaded roller rolling passage 3, a number of rollers 6 are arranged in form of cross-shape so that rotation axes 7 and 8 of the adjacent rollers 6 are perpendicular to each other as viewed in the roller advancing direction (along the loaded roller rolling passage 3).

In the ball screw, the balls bear the loads in one direction in the axial direction of the screw shaft and another direction opposing to that one direction. On the other hand, the rollers bear the load by compressing its peripheral surface between one wall surface of the roller rolling groove 1a and one wall surface of the loaded roller rolling groove 2a opposing to the wall surface of the roller rolling groove, so that the load only in one direction of the axial directions of the screw shaft 1 is born. By arranging, in form of cross-shape, the rollers 6 as in the present embodiment, the rollers 6 can bear the loads in one (1) and another (2) directions in the axial directions of the screw shaft 1.

The roller 6 has a diameter D longer than a length L thereof in the axial direction. There is used a roller 6 having a diameter D larger, so-called over-size, than a distance between a wall surface 9 of the roller rolling groove 1a and a wall surface 10 of the loaded roller rolling groove 2a opposing to the wall surface 9. Because of this reason, the roller is elastically deformed in the loaded roller rolling passage 3, and a load corresponding to this deformation exists inside the nut member 2 as preload. Since the rollers 6 are arranged in cross-shape in the loaded roller rolling passage 3, the loads applied to the nut member 2 from the rollers 6 act in repulsing directions to each other for the adjacent rollers 6, 6.

As shown in FIG. 3, escape grooves 1b and 2b are further formed to the bottom portions of the roller rolling groove 1a of the screw shaft 1 and the loaded roller rolling grooves 2a along these grooves. To the intersection portions between the upper surface and peripheral surface of the roller 6 and between the bottom surface and peripheral surface thereof, there are formed round portions 6a. Since the dimension L of the roller 6 in the axial direction is smaller than the diameter D of the roller 6, there may cause a case that the roller 6 is displaced during its rolling motion and the round portions 6a of the roller 6 contact the escape groove 1b and 2b. By applying the preload to the roller 6, this displacement will easily be caused. Radius of a round portion of the escape groove 1b (2b) is set to be larger than radius of the round portion of the roller so as not to disturb the rotation of the roller by a resistance caused at the time of the displacement. In addition, by forming the escape grooves 1b and 2b, it is not necessary to cut the sharp front end of the V-groove, so that the workability in the cutting operation can be also improved.

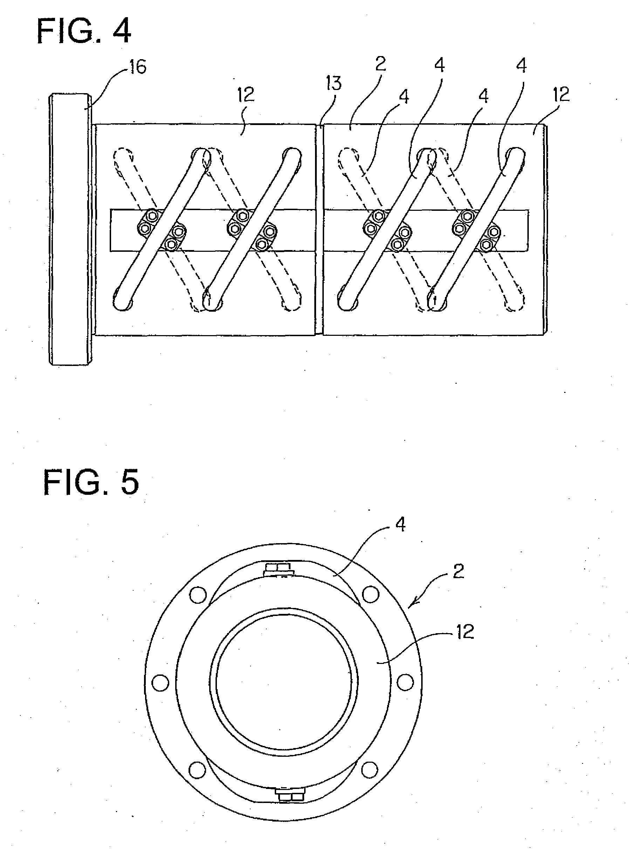

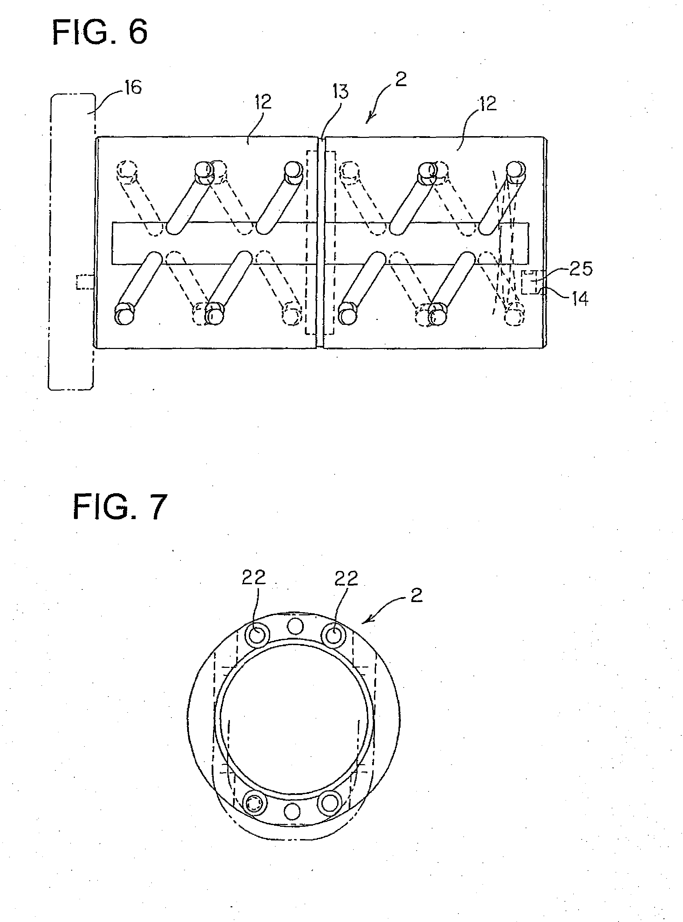

FIGs. 4 and 5 show the nut member 2, and FIGs. 6 and 7 also show the nut member 2 with the return pipe 4 being removed. FIGs. 4 and 6 are plan views of the nut member, and FIGs. 5 and 7 are front views of the nut member 2 viewed from the axial direction of the screw shaft 1. The nut member 2 is, as shown in FIG. 4, divided into two separate nut pieces 12, 12 between which a shim 13 is disposed. The shim 13 is disposed not so as to apply the preload to the roller 6 but to easily manufacture the roller 6. In a case of the nut member 2 having a long length in the axial direction, it becomes difficult to work a lead with high precision. The lead is formed to each of the separate nut pieces 12, 12 and these two nut pieces are combined thereafter by means of the shim 13. A bolt 25 is inserted into bolt insertion holes 22 formed to these separate nut pieces 12, 12 in their axial directions, and these separate nut pieces 12, 12 are combined by the screw-engagement of the nut member 2 with a flange 16 of an objective member to which the nut 2 is mounted so as to clamp the nut pieces 12, 12. In this operation, the shim 13 serves to position, in the circumferential direction, the two separate nut pieces 12, 12 when these nut pieces are displaced form each other in the circumferential direction. If the insertion holes 22 of these nut pieces 12, 12 are positioned when the end surfaces of the two nut pieces 12, 12 facing each other are mated, it is not necessary to dispose the shim 13. Further, when the bolt insertion hole 22 has a diameter larger than the diameter of the bolt 25, it is also not necessary to dispose the shim 13.

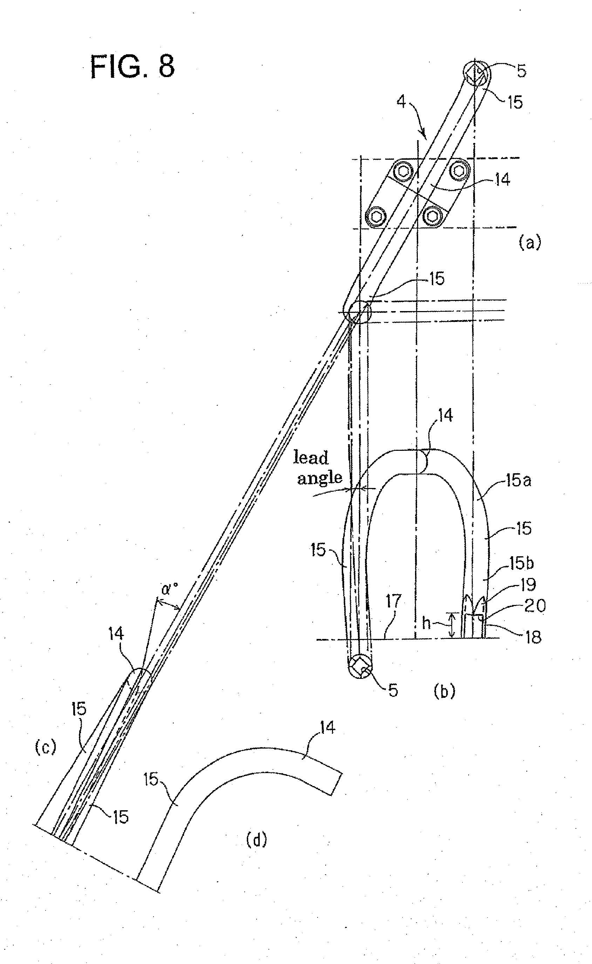

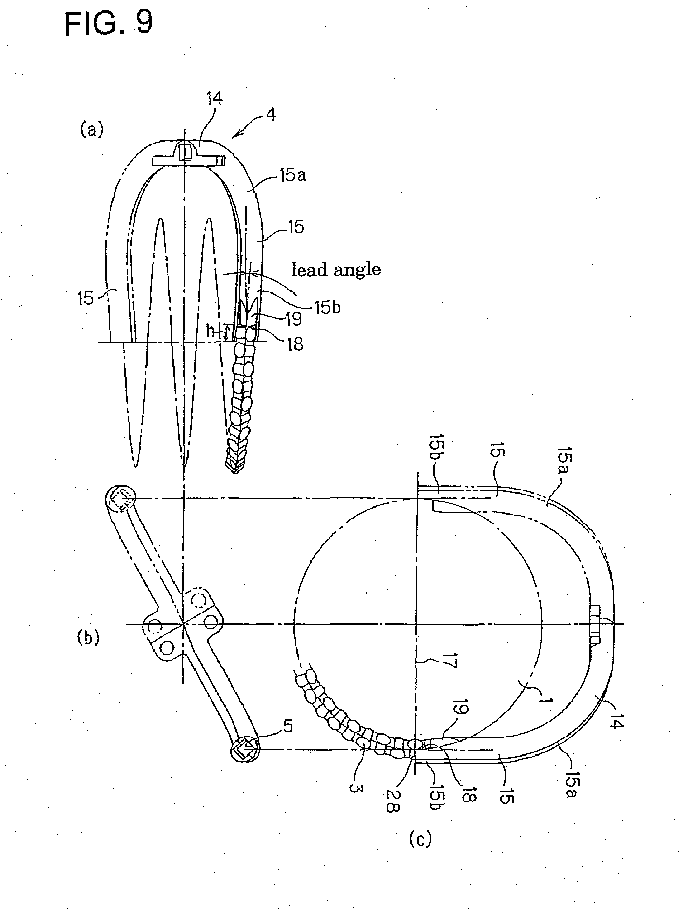

FIGs. 8 and 9 show the return pipe 4 to be mounted to the nut member 2. A plurality of return pipes 4 are arranged to the nut member 2 and the number thereof corresponds to the number of the rows of rollers circulating in the return pipes 4. The return pipes 4 serve to connect one and the other ends of the loaded roller rolling passage 3 so as to return the roller 6 rolling to the one end of the loaded roller rolling passage 3 to the other end of the loaded roller rolling passage 3 positioned on the succeeding several turns in spiral. Inside the return pipe 4, the roller return passage 5 having square section is formed along the axial direction thereof. Each of the return pipes 4 has a linearly extending central portion 14 and a pair of end portions 15 formed by bending both sides of the central portion 14 by about 90 degrees so as to provide a gate shape as an entire structure. Each end portion 15 has a circular-arc portion 15a having a constant curvature of radius and a linear front end portion 15b extending from the circular-arc portion 15a. As shown in FIG. 8(c), the paired end portions 15b are twisted each other in opposing directions with respect to the axis of the central portion 14, and as shown in FIG. 8(b) and FIG. 9(a), the front end portions 15b are inclined in directions reverse to each other in lead angle directions as viewed from the side of the screw shaft 1. In addition, as shown in FIG. 9(c), in a state viewed from the axial direction of the screw shaft, the front end portions 15b face the tangential direction of the loaded roller rolling passage 3. Further, in a state that the return pipes 4 are mounted to the nut member 2 and the central portions 14 of the return pipes 4 are positioned in the horizontal direction, the front end 28 of each return pipe 4 extends toward a horizontal surface 17 including the axis of the screw shaft 1. The return pipe 4 may be manufactured through a cutting working or by using a resin mold.

In comparison with a circular roller rolling passage as in a cross roller ring, in the spiral loaded roller rolling passage 3, in order to smoothly circulate the rollers, the attitude of the roller is extremely important at the time when the roller 6 is guided inside the return pipe 4 from the loaded roller rolling passage 3 or when the roller 6 is returned to the loaded roller rolling passage 3 from the inside of the return pipe 4. The roller 6 can be returned smoothly in the loaded roller rolling passage 3 without changing the attitude of the roller 6 entering into the loaded roller rolling passage 3 from the return pipe 4 (that is, without inclining the axis of the roller 6, i.e. causing so-called a skew) by returning the roller 6 to the loaded roller rolling passage 3 from the return pipe 4 with the attitude of the roller 6 being inclined by the amount of the lead angle. In addition, the roller 6 can be smoothly returned inside the return pipe 4 from the loaded roller rolling groove 3.

In order to prevent the return pipe 4 and a screw thread of the screw shaft from interfering, a arch-shaped notch 18 is formed to the front end portion 15b along the central line of a track of the roller 6. The shape of the notch 18 viewed from the direction of the axis of the screw shaft 1 provides a circular-arc shape. Further, inside the notch 18, in a state viewed from the axial direction of the screw shaft 1, a roller guide portion 19 is formed so as to intrude inside the screw thread. The sectional shape of the roller return passage 5 at the position of the roller guide portion 19 is formed to be a rectangular shape, i.e. square shape in this embodiment. By forming the roller guide portion 19, a section at which the roller return passage 5 has the square section is made longer in a plane perpendicular to the axis of the return pipe 4. Because of this reason, a space "h" at which the square roller return passage 5 is not formed can be made smaller, and a continuity, in section, between the loaded roller rolling passage 3 and the roller return passage 5 can be provided. As shown in FIG. 8(b), a front end portion 20 of the roller guide portion 19 provides a linear shape as viewed from the side portion of the screw shaft 1 and is inclined by the amount of the lead angle with respect to the horizontal plane 17. Moreover, in order to make smaller the space "h", the section of the roller guide portion 19 along the axial direction of the return pipe 4 is formed to be tapered so as to gradually narrow towards the front end portion 20.

The roller 6 is guided into the return pipes 4 after the rolling in the loaded roller rolling passage 3 having the square section. When the load is released from the roller moving spirally with the load being received in the loaded roller rolling passage 3, the roller moves naturally in the lead angle direction and tangential direction of the loaded roller rolling passage 3. In the case of the large space "h" mentioned above, there is a fear of causing so-called skew such as engagement with a joining portion between the loaded roller rolling passage 3 and the return pipe 4 or inclining of the axis of the roller 6. The space "h" can be made small by providing the roller guide portion 19, and accordingly, the roller 6 can be moved in the lead angle direction and tangential direction of the loaded roller rolling passage 3. Although the roller 6 can be of course guided to the front end portion 15b at which the notch 18 is formed, the roller 6 can be further stably guided by providing the roller guide portion 19 intruding inside the screw thread.

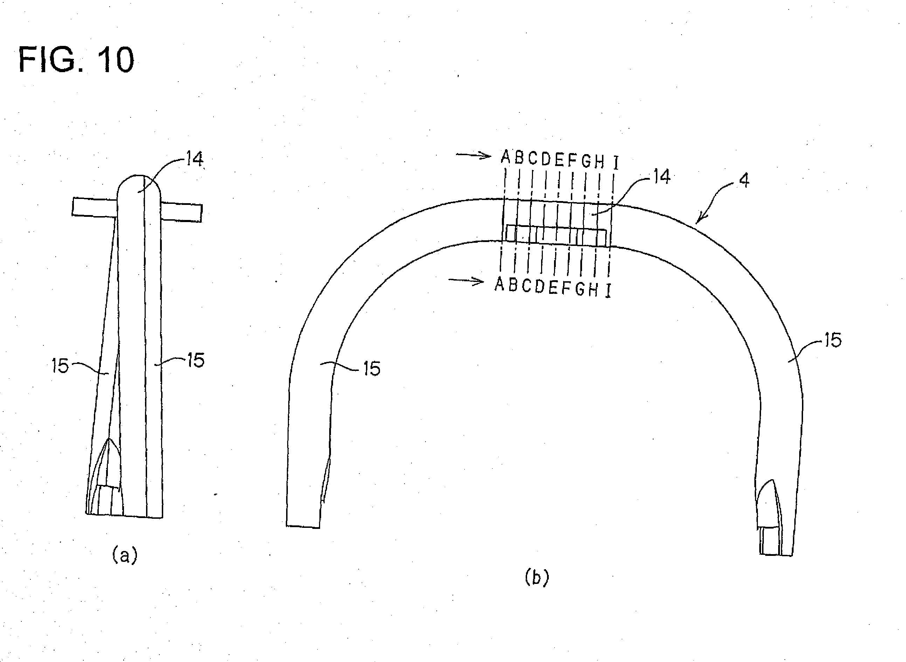

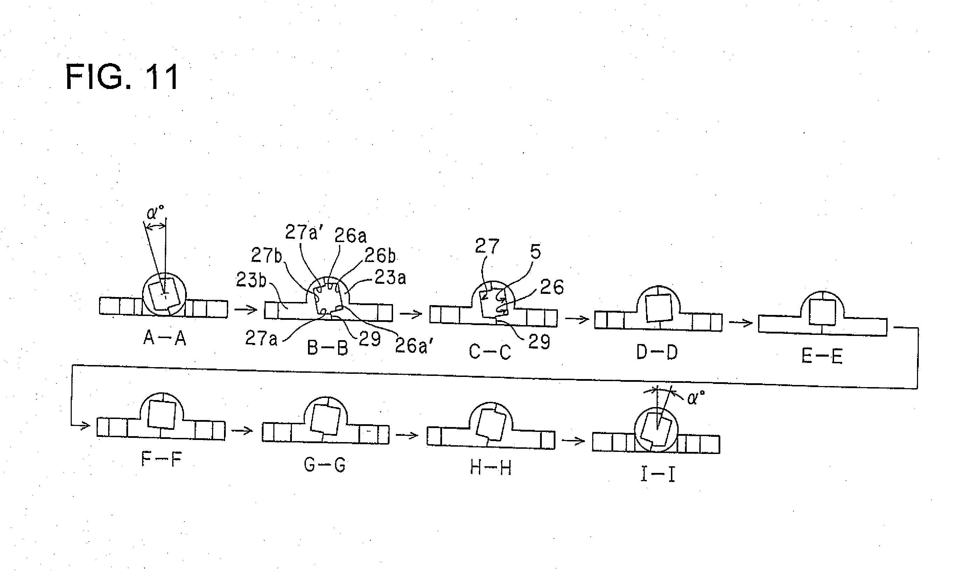

FIG. 10 represents the return pipe 4 and FIG. 11 shows a change of the sectional shape of the roller return passage 5 at the central portion 14 of the return pipe 4. The roller return passage 5 at the central portion 14 of the return pipe 4 is twisted such that the attitude of the roller 6 changes in accordance with the movement of the roller 6 in the axial direction of the central portion 14. The roller return passage 5 in the central portion 14 is twisted at an equal angle from the center position E-E in the axial direction of the central portion 14 toward both ends A-A or I-I, and the twisting angle α from the position A-A to the position E-E is equal to the twisting angle α from the position E-E to the position I-I. That is, herein, the roller return passage 5 is twisted so that the attitude of the rollers 6 scooped up at a pair of end portions 15, 15 accord with that at the center position E-E of the central portion 14. Further, the roller return passage 5 may be twisted up to the end portions 15, 15 to take a longer twisting section without limiting to the example in which the roller return passage 5 is twisted at only the central portion 14.

The roller 6 guided into the return pipe 4 moves in the axial direction while maintaining a constant attitude in the end portion. When the roller is guided in the central portion 14, the roller 6 moves in the axial direction from the position A-A to the position I-I while, for example, rotating clockwisely. When the roller 6 moves to the other end portion 15, the roller 6 moves in the axial direction while maintaining the constant attitude in the end portion 15. Thereafter, the roller returns to the loaded roller rolling passage 3.

The divided pieces 23a and 23b of the return pipe 4 are provided with the grooves 26 and 27, respectively, constituting the roller return passage 5. In the section in which the roller return passage 5 at the central portion 14 is twisted, one wall surface 26a of the groove 26 is inclined with respect to another wall surface 26a', and the roller 6 is guided between a wall surface 26a' of one of the divided pieces 23a (surface perpendicular to the divided surface 29) and a wall surface 27a' of the other divided piece 23b (surface perpendicular to the divided surface 29). This is done in consideration of easy rapping operation, i.e., no-causing of undercut in the case that the return pipe 4 is formed through a resin molding process. Even in such structure, the attitude of the roller is surely prescribed between the one wall surface 26a' and the other wall surface 27a'. Further, although the divided surfaces 29 of the divided pieces 23a and 23b are twisted in conformity with the twisting of the roller return passage 5, there is a case of no-twisting in consideration of easiness of the resin molding.

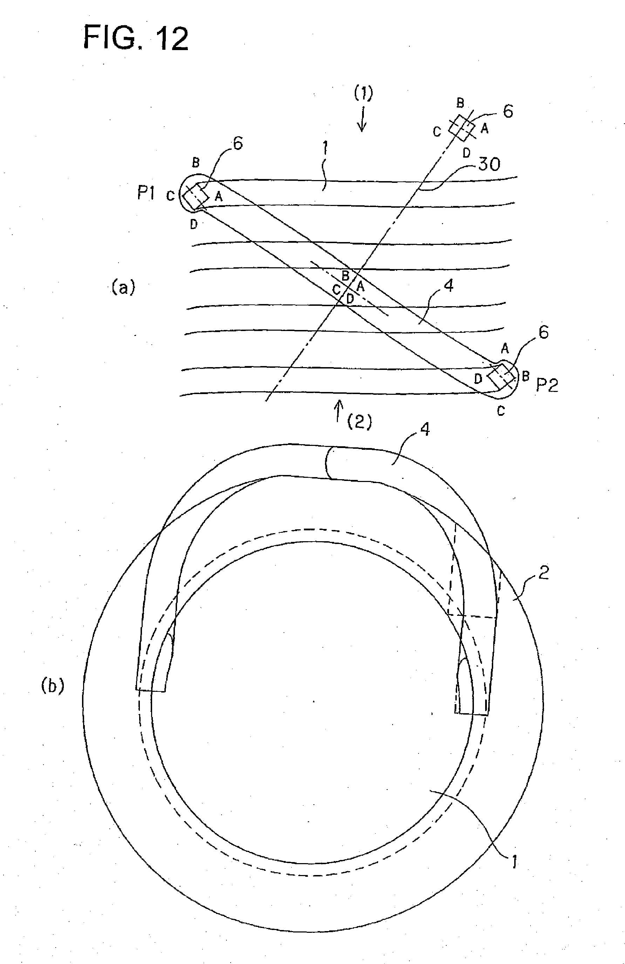

FIG. 12 shows a change in attitude of the roller 6. In FIG. 12, (a) shows a plan view and (b) shows a view from the axial direction of the screw shaft 1. The roller 6 is returned from one end of one turn of the loaded roller rolling passage 3 to the other end on the succeeding several turns on this side. In order to make minimal an angle for turning the attitude of the roller 6 in the roller return passage 5, the roller 6 is half reversed by passing the return pipe 4. More specifically, the side AB of the roller 6 positioned on the one end P1 in FIG. 12 rolls on the roller rolling groove 1a of the screw shaft 1 and the side CD of the roller 6 rolls on the loaded roller rolling groove 2a of the nut member 2, thereby bearing the load in the axial direction (1). When the roller passes the return pipe 4 and moves to the other end P2, the roller is reversed around a line 30 perpendicular to the return pipe 4. Then, the side CD of the roller 6 rolls on the roller rolling groove 1a of the screw shaft 1 and the side AB of the roller 6 rolls on the loaded roller rolling groove 2a of the nut member 2, thereby bearing the load in the direction (2). As mentioned above, by reversely turning the roller 6, the twisting angle of the roller return passage 5 can be made minimal. Although it is possible not to reversely turn the roller, in such case, it is necessary to turn the attitude of the roller by the angles of 45 or 90 degrees in the return pipe 4.

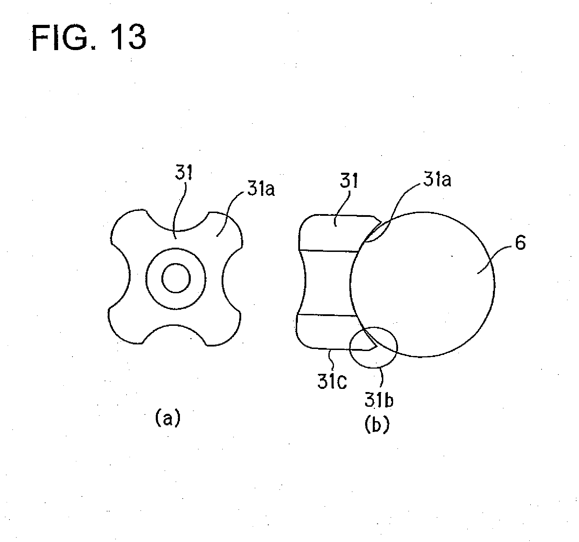

FIG. 13 shows a spacer 31 interposed between the rollers 6. The spacer 31 has both ends in which concave (recessed) portions 31a, 31a are formed so as to provide a curved surface in conformity with the outer peripheral surface of the adjacent rollers 6 to slidably contact the outer peripheral surface of the rollers 6. With the structure in which a corner portion 31b of the spacer 31 (intersecting portion of the recessed portion to a surrounding surface 31c of the spacer 31 except the concave portion 31a) has a sharp end, there is a fear that the spacer engages with the joint portion between the loaded roller rolling passage 3 and the return pipe 4. Because of this reason, the corner portion 31b of the spacer 31 is chamfered.

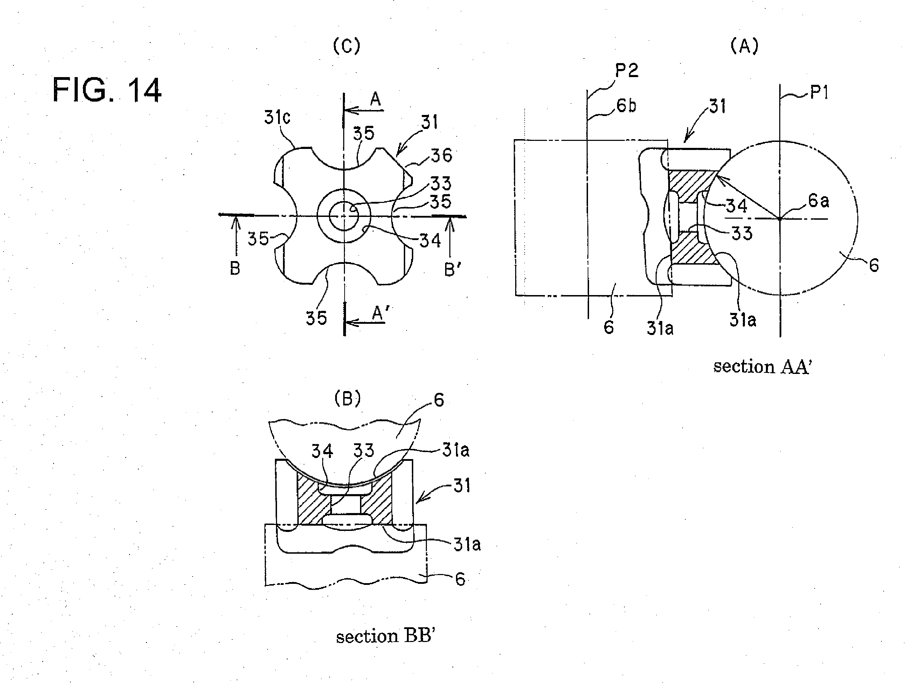

FIG. 14 shows a detail of the spacer. The concave portions 31a, 31a are formed so that the rollers are disposed in cross-arrangement, and the radius of curvature of the concave portion is set to be slightly larger than a radius of the roller 6. As shown (B) in FIG. 14, the roller contacts the concave portion 31a along substantially entire length in the axial direction of the roller 6. In the state that a pair of rollers 6, 6 arranged on both ends of the spacer in its advancing direction contact the concave portions 31a, 31 a, each of the paired axes 6a, 6b of the rollers 6, 6 are positioned in the parallel paired planes P1 and P2, respectively. When the axis 6a of the roller 6 is rotated by 90 degrees in the plane P1 so as to provide the parallel arrangement, the axes 6a, 6b of the rollers 6, 6 becomes parallel with each other. When a plurality of rollers 6 and a plurality of spacers 31 are stacked in a state that the rollers 6, 6 contact the concave portions 31a, 31a of the spacer 31, the rollers and the spacers are connected in series. As mentioned above, by connecting the plural rollers and spacers in series, the plural rollers, 6 and the plural spacers 31 smoothly circulate, without causing any skew, along the spiral track in the loaded roller rolling passage 3 and the linear track in the return pipe 4, which was confirmed through experiment. Herein, the term "parallel" includes not only a case of completely parallel state of the planes of the plural rollers 6 and the plural spacers 31 but also a case in which one of the rollers 6 and the spacers 31 has a plane slightly inclined with respect to a plane of the other one thereof in a range in which the rollers and the spacers smoothly circulate along the two tracks.

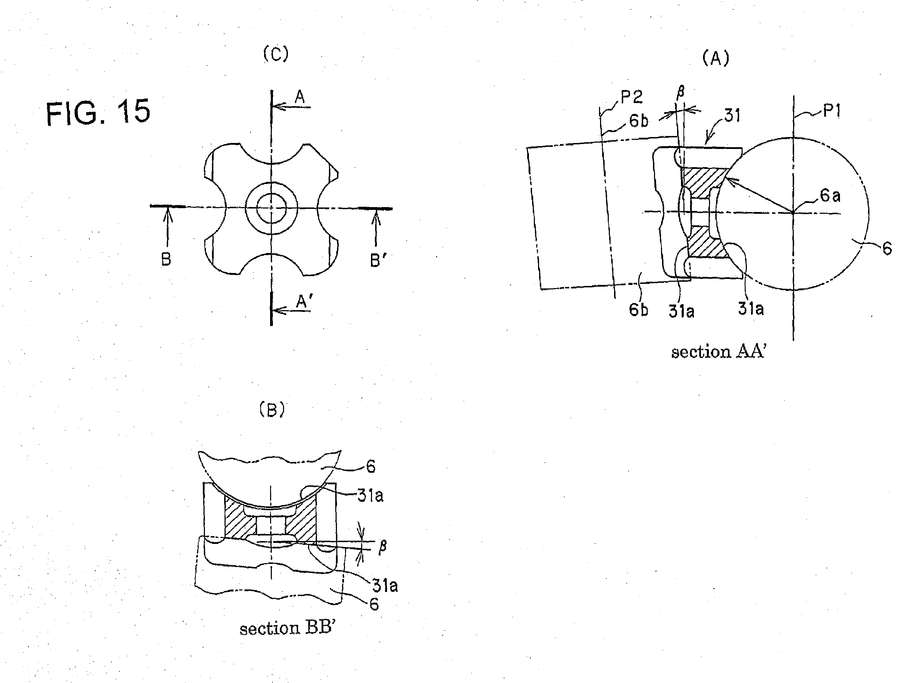

FIG. 15 shows a comparative example in which the plane P2 in which the axis 6b of the roller 6 is arranged is inclined by an angle of β with respect to the plane P1 in which the axis 6a of the roller 6 is arranged. In this case, when a plurality of rollers 6 and a plurality of spacers 31 are stacked in a state that the rollers 6, 6 contact the concave portions 31a, 31a of the spacer 31, the rollers and the spacers are connected in a circular-ring shape. In a roller bearing in which the rollers are assembled, since the loaded roller rolling passage is formed in the circular-ring shape, it is often caused that the one of the concave portions 31a of the spacer 31 is inclined with respect to the other one of the concave portions 31a so that the axis of the roller 6 is directed toward the center of the loaded roller rolling passage. The inventor of the subject application confirmed through experiment that when the concave portion 31a is inclined, a plurality rollers 6 and a plurality of spacers 31 smoothly circulate in the spiral track of the loaded roller rolling passage, but circulate meanderingly in the linear track in the return pipe 4 and not smoothly circulate therein.

Now back to FIG. 14(A), the spacer 31 has the front shape having square shape in conformity with the sectional shape of the loaded roller rolling passage 3 so that the spacer 31 does not incline in the square loaded roller rolling passage 3. At the central portion of the spacer 31, a lubricant holding port 33 is opened so as to communicate the paired concave portions 31a, 31a with each other. Lubricant reservoir recesses 34, each having a diameter larger than that of the lubricant holding port 33, are formed to both end portions of the lubricant holding port 33 so as to supply the lubricant to the portion between the roller 6 and the concave portion 31a of the spacer 31. Four lubricant holding grooves 35 are formed to the surrounding surface of the spacer 31 so as to keep a lot of lubricant. A notch 36 may be formed to one corner portion of the spacer 31 as a mark at the time of assembling.

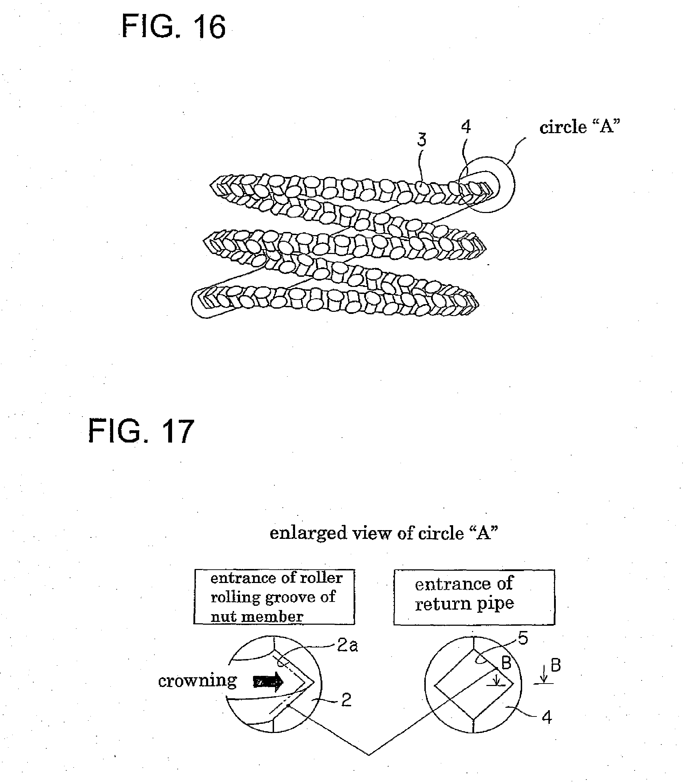

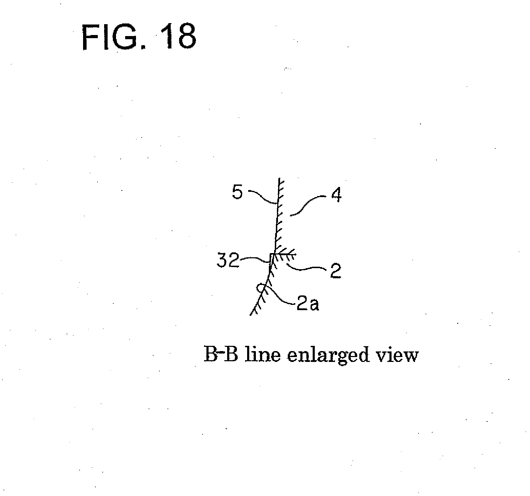

FIG. 16 shows a joint portion between the loaded roller rolling passage 3 and the return pipe 4, and FIG. 17 shows a detailed view of the portion "A" in FIG. 16 (that is, a view comparing the sectional shape at the entrance of the nut member to the roller rolling groove with the sectional shape of the return pipe at the entrance to the return pipe 4). The sectional shape of the roller return passage 5 at the entrance of the return pipe 4 is slightly larger than the sectional shape of the loaded roller rolling groove 2a of the nut member 2. For this reason, a slight stepped portion is formed at the joint portion between the loaded roller rolling groove 2a of the nut member 2 and the roller return passage 5 of the return pipe 4. However, the loaded roller rolling groove 2a of the nut member 2 and the roller return passage 5 of the return pipe 4 have the similar shapes having the V-shaped sections which are shifted by 90 degrees from each other, so that as shown in FIG. 18, the shapes of the loaded roller rolling groove 2a of the nut member 2 and the roller return passage 5 of the return pipe 4 can be confirmed with each other by crowning (cutting obliquely) a portion 32 of the loaded roller rolling groove 2a of the nut member near the return pipe 4. Accordingly, the stepped portion can be prevented from causing and the roller 6 can smoothly circulate. In addition, the stress generated at the time when the roller enters into the loaded roller rolling groove 2a from the return pipe 4 can be damped.

It is further to be noted that the present invention is not limited to the described embodiment and many other changes and modifications may be made without departing from the gist of the present invention. For example, in the described embodiment, although the rollers are disposed in cross-arrangement, a parallel arrangement, in which the axes of the adjacent rollers are parallel with each other, may be adopted. In addition, a plurality of spacers may be connected in series by using a flexible belt member. Moreover, the return member is not limited to the return pipe as far as a roller return passage is formed.

## Claims

1. A roller screw comprising:
a screw shaft having an outer peripheral surface in which a spiral roller rolling groove is formed;
a nut member having an inner peripheral surface in which a spiral loaded roller rolling groove is formed so as to oppose to the roller rolling groove of the screw shaft;
a return member connecting one and another ends of a loaded roller rolling groove of the nut member and configured to circulate a roller rolling the loaded roller rolling passage between the roller rolling groove of the screw shaft and the loaded roller rolling groove of the nut member; and
a plurality of rollers disposed in the loaded roller rolling passage and the return member,
wherein a spacer is disposed between a pair of adjacent rollers so as to prevent the paired rollers from contacting each other.

2. The roller screw according to claim 1, wherein the spacer is formed with concave portions at both ends in an advancing direction thereof so as to contact an outer peripheral surface of the roller, and the roller contacts the concave portions along an entire length in the axial direction thereof.

3. The roller screw according to claim 2, wherein a pair of axes of the rollers are disposed in a pair of planes substantially parallel with each other in a state that the paired rollers disposed at both the ends in the advancing direction contact the concave portions of the spacer.

4. The roller screw according to claim 2 or 3, wherein an intersecting portion of the concave portion of the spacer and a surrounding surface portion of the space except the concave portion is chamfered so as to perform a smooth circulation of the spacer.

5. The roller screw according to any one of claims 1 to 4, wherein the return member includes a central portion extending linearly and a pair of end portions bent on both sides of the central portion, front end portions of the end portions are disposed in a tangential direction of the loaded roller rolling passage as viewed from the axial direction of the screw shaft and are inclined in a lead angle direction of the loaded roller rolling passage as viewed from a side of the screw shaft.

6. The roller screw according to any one of claims 1 to 5, wherein a loaded roller rolling passage having a square section is formed between the roller rolling groove of the screw shaft and the loaded roller rolling groove of the nut member, and axes of a pair of adjacent rollers are perpendicular to each other as viewed from a roller advancing direction.
